# EUROPÄISCHE PATENTSCHRIFT

(11) **EP 0 744 243 B1**
(45) Veröffentlichungstag und Bekanntmachung des Hinweises auf die Patenterteilung: **27.02.2002**
(21) Anmeldenummer: 96106411.0
(22) Anmeldetag: 24.04.1996
(51) Int. Cl.: B23Q 1/25, B23Q 1/70, B24B 19/12

(54) **Werkzeugmaschine mit zwei Arbeitsspindeln**
Machine tool with two spindles
Machine-outil avec deux arbres moteurs

(30) Priorität: 06.05.1995 DE 19516711
(43) Veröffentlichungstag der Anmeldung: 27.11.1996
(73) Patentinhaber: Schaudt Maschinenbau GmbH, 70329 Stuttgart (DE)
(72) Erfinder: Reichel, Frank, Dr., 71229 Leonberg (DE)
(74) Vertreter: Herrmann, Günther

(56) Entgegenhaltungen:
- DE-C- 4 137 924
- US-A- 1 740 551

## Beschreibung

Die Erfindung betrifft eine Werkzeugmaschine mit zwei mit rotierenden, nacheinander mit einem Werkstück in Eingriff bringbaren Werkzeugen bestückten Arbeitsspindeln, von denen eine an einem Träger angeordnet ist, welcher schwenkbar auf einem Lagergehäuse der anderen Arbeitsspindel gelagert ist.

Unter "rotierenden Werkzeugen" sind im erfindungsgemäßen Sinn insbesondere Schleifwerkzeuge bzw. Schleifscheiben zu verstehen; darüber hinaus aber auch andere rotierend betriebene Bearbeitungsmittel, wie oszillierende Honsteine, Bürsten und dergleichen.

Eine Maschine der eingangs bezeichneten Art ist zum Schleifen von Linsen durch die US-A-1 740 551 bekannt geworden, gemäß der zur Ausübung relativ kleiner Schleifkräfte eine kleinere Schleifscheibe mittels eines federbelasteten Hebelsystems relativ zu einer größeren Schleifscheibe verschwenkbar bzw. gegen das Werkstück anstellbar ist.
Außerdem ist durch die DE-PS 41 37 924 eine Schleifmaschine bekannt, deren beide Schleifscheiben jeweils auf einem Schleifschlitten angeordnet sind, von denen der eine Schleifschlitten auf dem anderen Schleifschlitten angeordnet und relativ zu diesem verschiebbar ist.

Der Erfindung liegt die Aufgabe zugrunde, eine Maschine der bezeichneten Gattung zu vereinfachen.

Diese Aufgabe wird erfindungsgemäß durch eine Werkzeugmaschine mit den Merkmalen des Anspruchs 1 gelöst.

Um das an der schwenkbaren Arbeitsspindel gelagerte Werkzeug in die Arbeitsposition bzw. mit dem Werkzeug in Eingriff zu bringen oder beim Einsatz des zweiten Werkzeuges wegzuschwenken ist gemäß einer Weiterbildung ein am Träger angreifender Stellzylinder vorgesehen.
Die mit der Erfindung erzielte spezifische Betriebsweise wirkt sich insbesondere bei einer Werkzeugmaschine aus, die nach einem zusätzlichen Vorschlag als mit zwei Schleifspindeln ausgestattete Rundschleifmaschine ausgebildet ist, deren Schleifscheiben senkrecht zur Werkstücklängsachse bewegbar sind.
Bei einer derartigen Rundschleifmaschine ist es weiterhin zweckmäßig, wenn die an der schwenkbaren Schleifspindel gelagerte Schleifscheibe kleiner ist als die an der fest auf dem Schleifschlitten angeordneten Schleifspindel gelagerte Schleifscheibe. Auf diese Weise können beispielsweise mit der fest gelagerten Schleifscheibe große Schleifkräfte zum Schleifen der großen Außenkontur an einer Nockenwelle und mit der kleineren, schwenkbaren Schleifscheibe konkave Nockenkrümmungen geschliffen werden, die geringere Schleifkräfte erfordern und damit die Schwenklagerung der Schleifscheibe relativ wenig belasten.

Der mit der Erfindung erzielte Vorteil besteht in der kompakten, stabilen Bauweise der Spindellagerung, die durch Kombination einer einzigen Schlittenführung für beide Werkzeuge und einer Schwenkanstellung für eines der Werkzeuge optimale Voraussetzungen für eine vereinfachte, präzise Betriebsweise schafft.

Die Erfindung wird nachstehend anhand eines in der Zeichnung dargestellten Ausführungsbeispiels näher erläutert.

Hierbei zeigen:
- Figur 1: den die Schleifscheibenlagerung betreffenden Teil einer Rundschleifmaschine in einer Arbeitsstellung zum Schleifen der Außenkontur eines Nockens und
- Figur 2: eine Arbeitsstellung der Rundschleifmaschine zum Schleifen einer einfallenden Flankenkontur des Nockens.

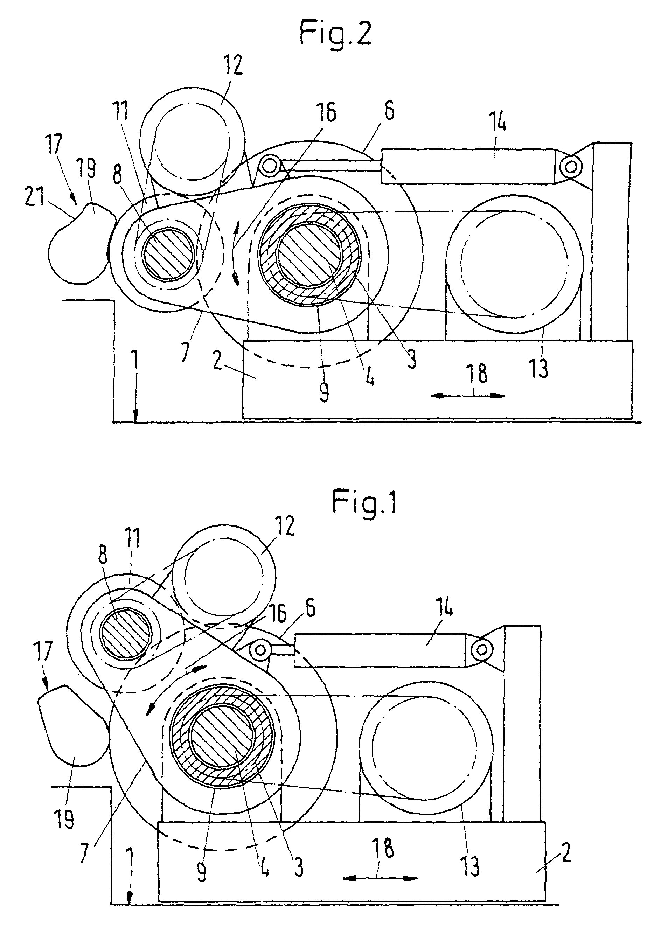

Ein auf einem Maschinenbett 1 einer Werkzeugmaschine in Form einer nicht weiter dargestellten Rundschleifmaschine geführter Arbeits- bzw. Schleifschlitten 2 trägt in einem fest installierten Lagergehäuse 3 eine Arbeits- bzw. Schleifspindel 4, auf der ein erstes Werkzeug in Form einer großen Schleifscheibe 6 gelagert ist.
Auf dem Lagergehäuse 3 der Schleifspindel 4 ist ein Träger 7 mit einer zweiten Arbeits- bzw. Schleifspindel 8 schwenkbar gelagert, indem ein Schwenklager 9 des Trägers 7 die Schleifspindel 4 bzw. deren Lagergehäuse 3 konzentrisch umschließt.
Auf der Schleifspindel 8 ist ein zweites Werkzeug in Form einer kleineren Schleifscheibe 11 gelagert.
Die kleinere Schleifscheibe 11 ist durch einen am schwenkbaren Träger 7 angeordneten Motor 12 und die größere Schleifscheibe 6 durch einen auf dem Schleifschlitten 2 angeordneten Motor 13 antreibbar.
Durch einen am Träger 7 angreifenden Stellzylinder 14 ist der Träger mit seiner auf der Arbeitsspindel 8 gelagerten Schleifscheibe 11 in Richtung des Doppelpfeils 16 gegen ein Werkstück, im dargestellten Fall eine Nockenwelle 17, anstellbar bzw. nach oben wegschwenkbar.
In der in Figur 1 dargestellten Arbeitsstellung ist bei abgeschwenkter Schleifscheibe 11 die auf dem in Richtung des Doppelpfeils 18 quer zu der senkrecht zur Zeichenebene verlaufenden Längsachse der Nockenwelle 17 verschiebbaren Schleifschlitten 2 gelagerte größere Schleifscheibe 6 in Kontakt mit einem Nocken 19 der Nockenwelle 17 zum Vorschleifen der Nockenkontur.
In der in Figur 2 dargestellten Arbeitsstellung ist bei zurückgefahrenem Schleifschlitten 2 die kleinere Schleifscheibe 11 gegen den Nocken 19 abwärtsgeschwenkt zum Schleifen der konkav einfallenden Flanken 21.

## Patentansprüche

1. Werkzeugmaschine mit zwei mit rotierenden, nacheinander mit einem Werkstück (17) in Eingriff bringbaren Werkzeugen (6, 11) bestückten Arbeitsspindeln (4 bzw. 8), von denen eine erste Arbeitsspindel (8) an einem Träger (7) angeordnet ist, welcher schwenkbar auf einem Lagergehäuse (3) der zweiten Arbeitsspindel (4) gelagert ist, **dadurch gekennzeichnet, dass** der schwenkbare Träger (7) der ersten Arbeitsspindel (8) ein die zweite Arbeitsspindel (4) bzw. deren Lagergehäuse (3) konzentrisch umschließendes Schwenklager (9) aufweist, wobei von den durch Schlittenzustellung sowie Verschwenken des Trägers (7) nacheinander die Schleifkräfte aufnehmenden Arbeitsspindeln (4, 8) die das Schwenklager (9) tragende zweite Arbeitsspindel (4) fest auf einem Arbeitsschlitten (2) gelagert ist.

2. Werkzeugmaschine nach Anspruch 1, **gekennzeichnet durch** einen am Träger (7) angreifenden Stellzylinder (14).

3. Werkzeugmaschine nach Anspruch 1 oder 2, **dadurch gekennzeichnet, dass** sie als mit zwei Schleifspindeln (4, 8) ausgestattete Rundschleifmaschine ausgebildet ist, deren Schleifscheiben (6, 11) senkrecht zur Werkstücklängsachse bewegbar sind.

4. Werkzeugmaschine nach Anspruch 3, **dadurch gekennzeichnet, dass** die an der schwenkbaren Schleifspindel (8) gelagerte Schleifscheibe (11) kleiner ist als die an der fest auf dem Schleifschlitten (2) angeordneten Schleifspindel (4) gelagerte Schleifscheibe (6).

## Claims

1. A machine tool with two operating spindles (4 and 8 respectively) which are provided with rotating tools (6, 11) movable into engagement with a workpiece (17) in succession arid a first operating spindle (8) of which is arranged on a support (7) mounted pivotably on a bearing housing (3) of the second operating spindle (4), **characterized in that** the pivotable support (7) of the first operating spindle (8) has a pivot bearing (9) surrounding the second operating spindle (4) or its bearing housing (3) concentrically, wherein - of the operating spindles (4, 8) absorbing the grinding forces by saddle advance and pivoting of the support (7) in succession - the second operating spindle (4) supporting the pivot bearing (9) is mounted fixed on an operating saddle (2).

2. A machine tool according to Claim 1, **characterized by** an actuating cylinder (14) engaging on the support (7).

3. A machine tool according to Claim 1 or 2, **characterized in that** it is constructed in the form of a circular grinding machine which is provided with two grinding spindles (4, 8) and the grinding discs (6, 11) of which are movable at right angles to the longitudinal axis of the workpiece.

4. A machine tool according to Claim 3, **characterized in that** the grinding disc (11) mounted on the pivotable grinding spindle (8) is smaller than the grinding disc (6) mounted on the grinding spindle (4) arranged fixed on the grinding saddle (2).

## Revendications

1. Machine-outil comprenant deux broches de travail (4 et respectivement 8) qui sont équipées d'outils rotatifs respectifs (6, 11) pouvant être amenés successivement en prise avec une pièce à usiner (17), et dont une première broche de travail (8) est disposée sur un support (7) qui est monté pivotant sur un carter de palier (3) de la deuxième broche de travail (4), **caractérisée en ce que** le support pivotant (7) de la première broche de travail (8) comprend un palier de pivotement (9) entourant de manière concentrique la deuxième broche de travail (4), à savoir son carter de palier (3), et **en ce que** des deux broches de travail (4, 8) reprenant les forces de rectification successivement grâce au déplacement de prise de passe du chariot ainsi qu'au pivotement du support (7), c'est la deuxième broche de travail (4) portant le palier de pivotement (9), qui est montée de manière fixe sur un chariot de travail (2).

2. Machine-outil selon la revendication 1, **caractérisée par** un vérin de positionnement (14) agissant sur le support (7).

3. Machine-outil selon la revendication 1 ou 2, **caractérisée en ce qu'**elle est réalisée en tant que rectifieuse cylindrique équipée de deux broches de rectification (4, 8), dont les meules de rectification (6, 11) peuvent être déplacées perpendiculairement à l'axe longitudinal de la pièce à usiner.

4. Machine-outil selon la revendication 3, **caractérisée en ce que** la meule de rectification (11) montée sur la broche de rectification (8) pivotante, est plus petite que la meule de rectification (6) montée sur la broche de rectification (4) disposée de manière fixe sur le chariot de rectification (2).
